# EUROPEAN PATENT APPLICATION

(11) **EP 1 650 599 A1**
(43) Date of publication of application: **26.04.2006**
(21) Application number: 04077928.2
(22) Date of filing: 22.10.2004
(51) Int. Cl.: G03C 1/79

(54) **Multi-layer support**

(71) Applicant: Fuji Photo Film B.V., 5047 TK Tilburg (NL)
(72) Inventor: Gillissen, Hubert Maria Joseph, 5056 JW Berkel-Enshot (NL)
(74) Representative: Winckels, Johannes Hubertus F.

(57) **Abstract**

This invention relates to a support comprising a substrate having a top side and a back side on which top side is provided at least two resin layers, the outermost layer which is most distance from the substrate comprises a homopolymer of alpha-olefin of carbon content C3 or higher, copolymers of alpha-olefin of carbon content C3 or higher or copolymers of alpha-olefin of carbon content C3 or higher with ethylene or mixtures of afore mentioned homopolymers or copolymers of alpha-olefins with polyethylene which comprise at least 50 % of afore mentioned homopolymers or copolymers of alpha-olefins.

## Description

### Field of the invention

This invention relates to a support material, in particular a resin coated support material for use in recording applications.

### Background of the invention

In general a support material used in recording media consists of a substrate on which at least one resin layer is supplied. On top of this resin layer a receiving medium is applied depending on the recording method used, e.g. an emulsion layer for (conventional) photography applications or a (microporous) ink receiving layer for inkjet applications.

A typical example of a recording medium is a recording medium for a photographic image in which a paper substrate is coated with a layer of polymer resin, for example polyethylene. On top of this polyethylene layer photographic emulsions are applied in which the image is formed.

Typically, recording media for imaging methods, and in particular recording media for photographic paper, are produced by using a melt-extrusion coating method or co-extrusion method. In (co-)extrusion coating, molten polymer layer(s) is (are) typically extruded through a slot die at elevated temperatures exceeding 270 °C. While in molten state, the polymer layer(s) is (are) drawn through the nip of two rollers together with the substrate to be coated. One of these rollers, the chill roller, is cooled in order to solidify the polymer layer(s). The other roller, the back-up roller, which is usually provided on its circumference with a layer of a compressible material, applies pressure to effect the adhesion of the substrate and the polymer layer(s).

An important aspect of the support is the resin surface appearance, which should be smooth and exhibiting a high gloss. Further it is important that the resin surface of the support does not have too much crater defects, also named pits, which may be caused by air entrapment by the rotation of the chill roll, upon melt-extrusion coating of resin on the substrate. When the number of pits increases, the outer appearance of the support is damaged and the quality of the recording media prepared using such a support deteriorates.

The number of pits increases when using higher line-speeds in extrusion coating and therefore it has been difficult to increase the production speed and productivity in the manufacturing of supports for recording media.

The number of pits also increases with a reduction of the total thickness of the resin layers of the support. Therefore, it has been difficult to reduce the costs of the supports for recording media. The number of crater defects of a resin coated substrate can be reduced by the increase of the melt temperature of the resin layers above the temperature, which is needed to assure the adhesion of the resin layer(s) with the substrate. This is generally not preferred because of its associated risks for generating more defects, for instance, because it may give rise to die drool. These defects lead to a deterioration of the appearance of the support and require a production stop to remedy them.

In the prior art various solutions for above mentioned crater defect problems are proposed.

EP-A-0 285 146 describes a method of reducing the number of crater defects at high extrusion line speeds such as 200 m/min, by replacing the air on the chill roller with a gas which can escape more readily through the extruded resin film.

JP 11352638 A describes another method at high extrusion line speeds such as 200 m/min in which a resin film coming out an extruder is passed between a nip and a cooling roller along with the base material and where the temperature of the resin film in the nip is increased.

EP-A-1 130 460 describes another method at high extrusion line speeds such as 300 m/min in which a paper substrate is heated prior to extrusion coating with polymer resin layer(s). Also other applications propose methods for the reduction of craters with a major disadvantage in the technical complexity or potential risk for damage to production equipment damage of the proposed system or increased number of production steps in producing the support. So for example in JP 10-157483 a process is described in which after the first nip, new pressing with hot roller(s) is used at least one time, and in US-A-4 994 357 a process is described in which upon extrusion coating the molten resin layer(s) are passed between a chill roller and a back-up roller under a linear pressure up to 200 kg/cm and in JP 59198451 a process is described in which the support is prepared by double consecutive extrusion coating.

EP-A-0 183 467, addressing the improvement of stiffness of base paper describes the use of a highly stiff polymer, specifically polycarbonate in the outermost resin layer. Using this polycarbonate the amount of crater defects can be reduced.

EP-A-0 952 483 describes the reduction of crater defects in resin coated base paper by providing the base paper additionally with a pigment coating based on clay and/or other pigments. In the art of providing support materials for recording media there remains a need for low costs and high speed production of the media, whereby the amount of crater defects on the support remains at a sufficiently low level.

### Summary of the invention

It is an object of the present invention to provide a support for recording media with superior surface properties, i.e. a minimum amount of crater defects.

It is a further object of the present invention to provide a support for recording media that can be produced at very high line speed during melt extrusion-coating, without sacrifice to the surface properties.

It is a further object of the present invention to provide a support for recording media having a low thickness of polymer resin, expressed as weight of resin per surface area, which can be produced at high extrusion speed, whereby good surface properties are maintained.

It is another object of the present invention to provide a support for recording media at relatively low resin melt temperature with superior surface properties, i.e. a minimum amount of crater defects at high line speed during extrusion coating.

These and other objects of the present invention are achieved by providing a support for recording media wherein the outermost layer comprises an alpha-olefin with 3 or more carbon atoms ("C₃+alpha-olefin").

### Detailed description

The present invention provides a support comprising a substrate having a top side and a back side, wherein on at least its top side are provided at least two resin layers, wherein the outermost layer, which is most distant from the substrate, comprises a polymer comprising alpha-olefin monomers of carbon content C3 or higher (C₃+ alpha-olefin).

With this invention it has become possible to provide a support for a recording medium that can be produced at high line speeds, without unacceptable crater defects. Furthermore the support of this invention can be produced at high speeds with a low thickness of polymer resin, expressed as weight of resin per surface area. The invention also provides a support for recording media which can be produced at relatively low resin melt temperature at high line speeds during melt extrusion coating with a minimum amount of crater defects. The invention provides furthermore a support for recording media that gives a high smoothness and gloss, while using readily available, easily processable, low cost polyolefin raw materials. The support of the present invention can be produced at lower linear pressure between the chill roll and the nip roll than conventionally used, reducing the risk of damage to the chill roll, thereby increasing its lifetime.

When a substrate, more specifically a paper substrate, is provided on its top side with at least two resin layers, of which the outermost layer which is most distance from the substrate comprises a non-pigmented low density polyethylene layer (autoclave type or tubular reactor type), the occurrence of crater defects is statistically not significantly different as compared with a fully pigmented low density polyethylene mono-layer. When using medium density polyethylene the occurrence of crater defects is slightly increased; when using copolymers of ethylene and non-olefinic monomers, like vinyl acetate, vinyl methacrylic acid, ionomers and the like the occurrence of crater defects is slightly decreased. Exchanging the resin of the non-pigmented outermost layer of the paper substrate from low density polyethylene to another low stiffness polyolefin also does not lead to a large reduction in the occurrence of crater defects as compared with that obtained with a fully pigmented low density polyethylene mono-layer. Low stiffness polyolefins are olefins having a stiffness modulus of less than 2.0 Gpa and can be selected from low density polyethylene, low density polyethylene, medium density polyethylene, linear low density polyethylene, high density polyethylene, polypropylene and the like, However, the presence of an outer resin layer comprising linear low density polyethylene, e.g. Ziegler Natta linear low density polyethylene or bimodal linear low density polyethylene can lead to more difficult release of the resin layer from the chill roll in extrusion coating which in itself can lead to visual defects on the surface of the support or even worse to web break. This release problem is getting more serious the lower the specific density gets of the linear low density polyethylene in the outermost layer of the support. Also, when applying mixtures low density polyethylene and linear low density polyethylene in the outermost layer of the support the occurrence of crater defects on the surface of the support does not change.

Exchanging the resin of the non-pigmented outermost layer of the support from low density polyethylene for another low stiffness polyolefin, *i.e.* high density polyethylene, e.g. Ziegler Natta high density polyethylene or bimodal high density polyethylene, leads to a large increase in the occurrence of crater defects as compared with that obtained with a fully pigmented low density polyethylene mono-layer or compared with a low density or linear low density polyethylene or a mixture of these resins in the outermost layer, although release of the resin layer from the chill roller is improved with high density polyethylene in the outermost layer. This effect can be fruitfully utilized whenever release problems occur in the production of a support, especially in the production of supports with structured surfaces. When applying mixtures low density polyethylene, or linear low density polyethylene, and high density polyethylene in the outermost layer of the support the occurrence of crater defects on the surface of the support decreases with increasing content of low density polyethylene or linear low density polyethylene.

Surprisingly it was found that replacing the resin of the non-pigmented outermost layer of the support from low density polyethylene for another low stiffness homopolymer of alpha-olefin, but having a carbon content C3 or higher, *e.g.* polypropylene, polybutene-1, and the like, leads to a dramatic reduction in the occurrence of crater defects as compared with that obtained with a fully pigmented low density polyethylene mono-layer. It is this finding that forms the basis of the present invention.

The homopolymers of alpha-olefins of the present invention are preferably selected from alpha-olefin of carbon content C3 or higher *e.g.* polypropylene, poly-butene-1, poly-(3-methylbutene-1), poly-pentene-1, poly-(4-methylpentene-1), poly-(4,4-dimethylpentene-1), poly-(vinylcyclohexane), etc. In a preferred embodiment of the present invention, the homopolymers of alpha-olefins are selected from polypropylene and poly-butene-1. In the most preferred embodiment of the present invention, the homopolymers of alpha-olefins are selected from polypropylene *e.g.* Ziegler Natta polypropylene, metallocene polypropylene, high melt strength polypropylene.

The value of the melt flow index of the homopolymer of alpha-olefins of the outermost layer of the present layer is chosen in such a way that under the production conditions of the present invention there will be no or an acceptable level of interfacial instability between this outermost layer and the layer below this outermost layer and that there is no or an acceptable level of layer encapsulation.

An additional advantage is, that using a polypropylene polymer in the outermost layer the chill roll release in the manufacturing of the support and the gloss and abrasion resistance of said support are improved.

The copolymers of alpha-olefin of carbon content C3 or higher or copolymers of alpha-olefin of carbon content C3 or higher with ethylene are preferably selected from alpha-olefin of carbon content C3 or higher e.g. propylene, butene-1, 3-methylbutene-1, pentene-1, hexene-1, octene-1, 4-methylpentene-1, 4,4-dimethylpentene-1, vinylcyclohexane, norbornene and the like and mixtures thereof. In a preferred embodiment of the present invention, the copolymers of alpha-olefins are selected from binary copolymers of propylene and ethylene or from copolymers of butene-1 and ethylene or from propylene and butene-1 or are terpolymers of ethylene, propylene and butene-1. In the most preferred embodiment of the present invention, the copolymers of alpha-olefins are selected from copolymers from propylene and ethylene. With the increase of the ethylene content of the copolymer in the outermost resin layer of the support, the occurrence of crater defects again increases. Therefore, from a practical point of view in a trade-off between crater defects against other wished for properties, the copolymer of alpha-olefin of carbon content C3 or higher with ethylene preferably contains at least 30 % of alpha-olefin monomers with carbon content C3 or higher.

The value of the melt flow index of the copolymer of alpha-olefins of the outermost layer of the present layer is chosen in such a way that under the production conditions of the present invention there will be no or an acceptable level of interfacial instability between this outermost layer and the layer below this outermost layer and that there is no or an acceptable level of layer encapsulation.

Additionally, in the present invention the outermost layer of the support can comprise of mixtures of afore mentioned homopolymers or copolymers of alpha-olefins with one or more polyethylene resins. In a preferred embodiment of the present invention, the homopolymers of alpha-olefins are selected from polypropylene and poly-butene-1. In the most preferred embodiment of the present invention, the homopolymer of alpha-olefin is polypropylene. In a preferred embodiment of the present invention, the copolymers of alpha-olefins are selected from copolymers of propylene and ethylene or from copolymers of butene-1 and ethylene. In the most preferred embodiment of the present invention, the copolymers of alpha-olefins are selected from copolymers from propylene and ethylene. Most preferably, the polyethylene in the mixtures of afore mentioned homopolymers or copolymers of alpha-olefins with polyethylene in the outermost resin layer of the support is selected from one or more low density polyethylene resins. The mixtures of afore mentioned homopolymers or copolymers of alpha-olefins with polyethylene resin(s) can be either a dry blend mixture or a melt blend mixture. When utilizing mixtures of afore mentioned homopolymers or copolymers of alpha-olefins with polyethylene or other resins the crater defect performance can be improved even further by the usage of more effective mixing screws in the extruder e.g. screws with chaotic mixing elements or elongational mixing elements, or by using compounds of homopolymers or copolymers of alpha-olefins with polyethylene prepared in an off-line or on-line "piggy back" twin screw extruder or other mixing devices e.g Banbury mixer, Bush co-kneader and the like.

With the increase of the polyethylene content of the mixture of homopolymers or copolymers of alpha-olefins with polyethylene in the outermost resin layer of the support, the occurrence of crater defects again increases. Therefore, from a practical point of view in a trade-off between crater defects and other properties, such a mixture should comprise at least 50 % on a molecular basis, more preferably 70% and even more preferred 90% of said homo-polymers or copolymers of alpha-olefins.

The flow properties of the mixture of the homopolymers of alpha-olefins or copolymers of alpha-olefins with one or more polyethylene resins in the outermost layer of the present layer is chosen in such a way that under the production conditions of the present invention there will be no or an acceptable level of interfacial instability between this outermost layer and the layer below this outermost layer and that there is no or an acceptable level of layer encapsulation.

In principle there is no limit to the coating weight of the outermost layer of the support of the present invention, as experimentation showed that also a coating weight of 9 g/m² of the outermost layer of the support did lead to a reduction of the occurrence of crater defects. When the support is used for instance as a support for a photographic printing paper, the presence of a non-pigmented outer layer leads to a reduction in sharpness of the image on the support, where the reduction in sharpness is increasing with an increase in the coating weight of the outermost layer of the support. Also for economical reason it is not preferred to use higher coating weights of homo-polymers or copolymers of alpha-olefins, or mixtures of these with one or more polyethylene resins when not directly necessary. Therefore, in a preferred embodiment of the present invention, the outermost layer of the support is applied with a coating weight which is at the most 3 g/m². In the most preferred embodiment of the present invention, the outermost layer of the support is applied with a coating weight which is at the most 1 g/m².

The outermost layer of the support of the present invention can be coloured with white opacifying pigments when required e.g. for improvement of image sharpness in the case that the support is used for instance as a support for a photographic printing paper or for improvement of the whiteness or opacity of the support. This white opacifying pigment can consists of any of the white pigments described in the art like anatase type titanium dioxide, rutile titanium dioxide, zinc oxide, zinc sulphide, lithopone and the like, or mixtures of any of these. In the most preferred embodiment of the invention the type of white pigment in the outermost layer of the support of the present invention consists of anatase type or rutile type titanium dioxide or mixture of these titanium dioxide types of pigments. Preferably, the particle size of the anatase type or rutile type titanium dioxide is between 0.1 µm and 0.4 µm and the concentration of the white pigment in the outermost layer of the support does not exceed 20 weight%.

The outermost layer of the support of the present invention may contain additionally small quantities of coloured dyes or pigments and/or blueing agents, e.g. ultramarine blue and/or violet, cobalt blue, phosphoric oxide cobalt, quinacridone pigments and mixtures of these, optical brighteners, most preferably bis-benzoxazole type optical brighteners, antioxidants, e.g. hindered phenol type anti-oxidants, phosphite type anti-oxidants, lactone type anti-oxidants and mixtures of these, anti-static agents, UV-stabilisers and/or light stabilisers, e.g. hindered amine light stabilisers, nickel chelates, substitutes benzophenones or benzotriazole, or other substances used as known additives for resin coated substrates. Also, the outermost layer of the support of the present invention may be provided with a component which promotes the adhesion of coating layer(s) applied on the surface of the outermost layer e.g. a gelatin layer when the support is used as a support in the manufacturing of a photographic printing paper. This component which promotes the adhesion of coating layer(s) applied on the surface of the outermost layer can consists of any of the components described in the art like for example co- and terpolymers modified for adhesion promotion with ethylene or polypropylene as one of the monomer components, and acrylic acid, acryl ester, methacrylic acid, methacryl ester, maleic anhydride, vinyl acetate, ionomers and similar as the other monomer component(s).

Alternatively, adhesion to the outermost layer of the support can be improved by conventional surface treatment methods known in the art e.g. corona treatment, plasma treatment, flame treatment, heat treatment or chemical priming or combinations of surface treatment methods.

The present invention consists of an support comprising a substrate having a top side and a back side on which at least on its topside is provided at least two resin layers, the outermost layer and a second layer between the outermost layer and the substrate. The second layer of the present invention is applied with a coating weight between 8 g/m² and 50 g/m², and preferably between 8 g/m² and 25 g/m². The type of resin in the second layer of the invention can be chosen from any type of extrusion coating resin known in the art, preferably the resin in the second layer of the invention is a polyolefin or olefin copolymer or a mixture of olefinic polymers. In a preferred embodiment of the invention the type of resin used in the second layer is a polyethylene resin or a mixture of different polyethylene resins. In the most preferred embodiment of the invention the type of resin used in the second layer is a low density polyethylene resin or a mixture of different low density polyethylene resins.

The resins or resin mixtures in the various layers of the present invention can be chosen independently from each other depending on the intended properties of the end product. The values of the melt flow index of the resins or resin mixtures in the second layer of the present invention is chosen in such a way that under the production conditions of the present invention there will be no or an acceptable level of interfacial instability between this second layer and the layer(s) adjacent to this second layer and that there is no or an acceptable level of layer encapsulation.

The second layer of the present invention further comprises a white opacifying pigment or a mixture of white opacifying pigments to enhance the whiteness and opacity of the support, or in the case this support is used as a support for a photographic paper to increase the sharpness of the image. This white opacifying pigment can consists of any of the white pigments described in the art like anatase type titanium dioxide, rutile titanium dioxide, zinc oxide, zinc sulphide, lithopone and the like. In the most preferred embodiment of the invention the type of white pigment in the second layer of the support of the present invention consists of anatase type or rutile type titanium dioxide or mixture of these pigments. Preferably, the particle size of the anatase type or rutile type titanium dioxide is between 0.1 µm and 0.4 µm and the concentration of the white pigment in the second layer of the support does not exceed 35 weight%. The anatase type titanium dioxide is preferably used in order to obtain a very good whiteness. The pigment types in the outermost layer and in the second layer may be chosen independently from each other. So, titanium dioxide of the anatase type may used in one of the layers and titanium dioxide of the rutile type may be used in another layer.

Optionally, the second layer of the support of the present invention may contain additionally small quantities of coloured dyes or pigments and/or blueing agents, e.g. ultramarine blue and/or violet, cobalt blue, phosphoric oxide cobalt, quinacridone pigments and mixtures of these, optical brighteners, most preferably bis-benzoxazole type optical brighteners, antioxidants, e.g. hindered phenol type anti-oxidants, phosphite type anti-oxidants, lactone type anti-oxidants and mixtures of these, anti-static agents e.g. semi-conductive metal oxide particles, UV-stabilisers and/or light stabilisers, e.g. hindered amine light stabilisers, nickel chelates, substitutes benzophenones or benzotriazole, or other substances used as known additives for resin coated recording media.

Additionally, the second resin layer of the support of the present invention may contain adhesion promoting additives as known in the art in order to improve the adhesion of the second layer with the outermost resin layer, to improve the adhesion of the second resin layer towards a possible third resin coating layer, or, when the second resin layer is the lowermost resin layer which is in contact with the substrate, to improve the adhesion towards this substrate (see e.g. US-A-5 466 519). Alternatively, there may be applied a tie layer as described in the art to promote adhesion between the second resin layer and the outermost resin layer, between the second resin layer and a possible third resin coating layer, or, when the second resin layer is the lowermost resin layer which is in contact with the substrate, to improve the adhesion of this second resin layer with this substrate. The tie layer can comprise materials as e.g. anhydride modified polyolefins such as anhydride modified polypropylene, anhydride modified polyethylene, anhydride modified ethylene vinyl acetate, anhydride modified ethyl methyl acrylate, anhydride modified ethyl acrylic acid, and copolymers and mixtures thereof.

The melt temperature of the second resin layer of the present invention when utilized as the lowermost resin layer which is in contact with the substrate can be chosen at a sufficiently high level to promote the adhesion of this second layer to the substrate without the need of adhesion promoting additives and/or tie layers. For this, the melt temperature should be at least 300 °C and more preferably at least 320 °C.

The application of a third layer below the second layer of the present invention which is even closer to the substrate might be advantageous e.g. to prevent the generation of die lip stripes in the case that the second layer of the present invention comprises a high concentration of titanium dioxide or other pigments. The third layer of the present invention is applied with a coating weight between 1 g/m² and 50 g/m², and preferably between 1 g/m² and 25 g/m². In a preferred embodiment of the invention the type of resin used in the third layer is a polyolefin type or a olefin copolymer or a mixture of various olefinic polymer type resins. In the most preferred embodiment of the invention the type of resin used in the third layer is a low density polyethylene resin or a mixture of different low density polyethylene resins. The resins or resin mixtures of this third layer can be chosen independently from the resins of the other layers and may be different depending on the intended properties of the end product. The values of the melt flow index of the resins or resin mixtures in the third layer of the present invention is chosen in such a way that under the production conditions of the present invention there will be no or an acceptable level of interfacial instability between this third layer and the resin layer(s) adjacent to this third layer and that there is no or an acceptable level of layer encapsulation.

The third layer of the present invention further preferably comprises a white opacifying pigment or a mixture of white opacifying pigments, most preferably an anatase type or rutile type titanium dioxide or mixture of these pigments with a particle size between 0.1 µm and 0.4 µm. The concentration of the white pigment in the third layer preferably does not exceed 20 weight% and most preferably does not exceed 15 weight%. The pigment types in the third layer and in the second layer may be chosen independently from each other. So, titanium dioxide of the anatase type may used in one of the layers and titanium dioxide of the rutile type may be used in the another layer. Optionally, the third layer may contain additionally small quantities of coloured dyes or pigments and/or blueing agents, e.g. ultramarine blue and/or violet, cobalt blue, phosphoric oxide cobalt, quinacridone pigments and mixtures of these, optical brighteners, most preferably bis-benzoxazole type optical brighteners, antioxidants, e.g. hindered phenol type anti-oxidants, phosphite type anti-oxidants, lactone type anti-oxidants and mixtures of these, anti-static agents e.g. semi-conductive metal oxide particles, UV-stabilisers and/or light stabilisers, e.g. hindered amine light stabilisers, nickel chelates, substitutes benzophenones or benzotriazole, or other substances used as known additives for resin coated recording media.

In order to promote the adhesion between the third layer and the adjacent second layer and/or the substrate, the usage of a tie layer above and/or below a third layer and/or the usage of an adhesion promoting additive in the third layer is possible. The tie layer can comprise materials as e.g. anhydride modified polyolefins such as anhydride modified polypropylene, anhydride modified polyethylene, anhydride modified ethylene vinyl acetate, anhydride modified ethyl methyl acrylate, anhydride modified ethyl acrylic acid, and copolymers and mixtures thereof.

The adhesion promoting additive can be selected from a tackifier (an adhesion-providing resin), an adhesive resin, talc, kaolin and calcium carbonate or a suitable combination of these. Examples of the tackifier include a rosin compound resin (e.g., methyl ester, glycerine ester and pentaerythritol ester of a rosin such tall oil rosin), a terpene resin (for example, poly-β-pinene), a coumarone-indene resin and a petroleum series hydrocarbon resin. Two or more of these resins may be used in combination. Specific examples of the petroleum series hydrocarbon resin include an aliphatic series petrole um resin, an aromatic series petroleum resin, a cyclo-pentadiene series petroleum resin, a copolymer series petroleum resin, a hydrogenation series petroleum resin, and an alicyclic series petroleum resin. The aliphatic series petroleum resin having 5 carbon atoms is particularly preferable, and the aromatic series petroleum resin having 9 carbon atoms is particularly preferable. The adhesive resins include for example, an ionomer (e.g., an ethylene-methacrylic acid copolymer cross linked by metal ions such as Na ions or Zn ions), an adhesive polyolefin resin, an ethylene copolymer resin such as an ethylenevinyl acetate copolymer (EVA), an ethylene-methyl methacrylate copolymer (EMMA), an ethylene-ethyl acrylate copolymer (EEA), an ethylene-methyl acrylate copolymer (EMA), an ethylene-acrylic acid copolymer (EAA), an ethylene-ethyl acrylate-maleic anhydride copolymer (E-EA-MAH), an ethylene-methacrylic acid copolymer (EMAA), and those obtained by graft-polymerizing a polyolefin (e.g., polypropylene and polyethylene) with maleic anhydride (MAH-g-polyolefin), and the metal salts thereof (such as salts of Na, Zn or Mg). Alternatively, the melt temperature of a third resin layer of the present invention, when utilized as the lowermost resin layer which is in contact with the substrate, can be chosen at a sufficiently high level to promote the adhesion of this third layer to the substrate without the need of often expensive adhesion promoting additives and/or tie layers. For this, the melt temperature should be at least 300 °C and more preferably at least 320 °C.

The support of the present invention, comprising a substrate having a top side and a back side, can also be provided on its back side with at least one resin layer and/or at least one other coating layer depending on the properties to be achieved like for instance waterproofing, anti-electrification, anti-curling, anti-blocking, anti-slip, splice strength, and/or the ability to receive and retain prints (e.g. bar codes or other indicia containing useful information). In the case the intended use of the support of the present invention is as the base for a photographic printing paper or a base for an inkjet paper, this back side is preferably extrusion coated with polyethylene resin(s) and most preferably a mixture of low density polyethylene and high density polyethylene. On top of this polymer layer an antistatic coating, an anti sticking coating and so on may be provided.

The substrate of the support of the present invention can be chosen from any substrate known in the art like natural pulp containing high quality paper, photographic base paper, pigment coated paper, synthetic paper or a polymer sheet material. The preferred substrate in the present invention is natural pulp containing high quality paper or photographic base paper or pigment coated paper with a base weight of 80-350 g/m², and most preferably with a base weight of 120 to 250 g/m². When using a pigment coated paper base as the substrate of the recording medium of the present invention, the average surface roughness (Ra) of the side of the pigment coated paper which receives the resin layers in accordance with the present invention, can be higher than those of the prior art, for instance those specified in EP-A-1 126 081, while still obtaining a surface without pits or crater defects. Thus, the use of high pigment coating layer weights and/or the use of supercalendering in the manufacturing of the pigment coated paper substrate can be avoided, which greatly reduces the manufacturing costs of said pigment coated paper substrate. The prior art teaches a surface roughness Rₐ below 1 µm in order to prevent the occurrence of crater like defects upon applying a polymer resin layer. In the present invention, the average surface roughness of the side of the pigment coated paper which receives the resin layers may be more than 1 µm, but is preferably less than 2.0 µm and most preferably less than 1.5 µm. To those known in the art it is evident, that a surface roughness Ra smaller than 1 µm will give improvements with respect to smoothness and gloss. However a value of Ra of higher than 1 may be used in accordance with the present invention, which sometimes may be desirable from the point of view of costs. The total coating weight of the pigment coating of this layer which receives the resin layers from the present invention is preferably less than 60 g/m² and most preferably less than 30 g/m². Even lower total coating weights of the pigment coating are possible with the present invention because of the superior ability to reduce the number of crater defects. The whiteness of the pigment coated substrate can be adjusted by addition of white pigments and/or blue dye and/or optical brighteners in the pigmented coating. Its gloss can be adjusted to the required level by calendering and/or super calendering and by selection of the appropriate pigment type(s) and particle size and size distribution. Typical pigments which can be used in the pigment coated paper substrate for the present invention are calcium carbonate, kaolin, barium sulphate, titanium oxide, clay, magnesium-aluminium silicate, aluminium oxide hydroxide, styrene-acrylic copolymers and combinations thereof. The particle size of the pigments is not particularly limited, but it will be appreciated by those known in the art, that pigments with smaller particle size distributions can have benefits in providing adhesion or gloss. Pigments in which at least 70% of the particles have a size smaller than 1 µm and at least 40% have a size between 0.35 and 0.8 µm may be advantageously used Typical binders which can be used in the pigment coated paper substrate for the present invention include styrene-butadiene latex, methyl methacrylatebutadiene latex, polyacrylate latex, polyvinyl alcohol, starch and other polysaccharide, and combinations thereof. When using as the substrate of the recording medium of the present invention a pigment coated paper the resin layer adjacent to the pigment coating of the paper preferably contains pigments or fillers e.g. titanium oxide, talcum, calcium carbonate in order to (additionally) increase the adhesion of this resin layer with the pigment coating of the paper.

When using the recording medium of the present invention which has as base substrate a pigment coated paper as a photographic printing paper an additional advantage offered by the pigment coated paper is that the amount of the titanium oxide in the resin layers of the present invention can be decreased because of pigment coating effectively hides the natural paper part of the pigment coated paper. Thus, the manufacturing costs can be decreased additionally without loosing image sharpness compared to traditional photographic printing papers as known in the art.

Depending on the use of the support, the layer structure of the present invention can be applied on the top side only or on the top side and also the back side of the substrate.

If necessary, the front surface, and optionally also the back surface of the substrate of the support of the present invention is subjected to an activation treatment before the melt-extrusion process. The treatment may comprise a corona treatment and/or a flame treatment and/or ozone treatment and/or plasma treatment and/or plasma deposition treatment and/or a heat treatment and/or a chemical priming

The support of the present invention can be manufactured by (tandem) extrusion coating techniques or consecutive extrusion coating techniques as described in the art. Most preferably the support of the present invention is manufactured by a co-extrusion technique in which all resin layers of the present invention and if required tie layers are applied to the substrate at the same time using feed block techniques or multi manifold die techniques. This greatly increases the economy of the manufacturing of the support. In the (co)extrusion line, the molten resin which is extruded from the die can furthermore be treated by ozone in order to improve the adhesion between the resin and the substrate. In order to even further improve the adhesion between the resin and the substrate, the melt temperature of the resin layer which is extruded from the die is at least 300 °C.

The preferred speeds for the co-extrusion process for the manufacturing of the support of the present invention may be up to 300 m/min or even more than 600 m/min which even more increases the economy of the manufacturing of the support. It is also possible to reduce the total amount of extrusion coated resin, while keeping the same amount of pits. It is for example possible to reduce the amount of top side coated resins from 30 g/m² to 20 g/m² by changing over from a mono-extrusion coated PE layer to a three layer co-extrusion coated polyolefin layer with an outermost layer using a homo-polymer of an α-olefin of a carbon content of C3 or higher keeping the same amount of pits.

The surface structure of the chill roll used in the manufacturing of the support of the present invention can be any glossy structure, including a mirror glossy type surface because of the many advantages of the present invention, however, most preferred is a glossy fine matte surface. In (co)extrusion coating, the amount of crater defects can even be further reduced when the present invention is combined with a higher temperature of the cooling medium in the chill roller. Using a higher temperature of the cooling medium of the chill roller will result in a higher temperature of the (co)extrusion coated substrate web as it is taken of from the chill roller. Although already effective in the case of a low density or linear low density polyethylene or a mixture of low density and linear low density polyethylene, it is preferably used in the present invention, because of the superior chill roller release properties of the outermost layer of the present invention. In a preferred embodiment of the present invention the surface temperature of the (co)extrusion coated substrate web as it is taken of from the chill roller exceeds 35 °C, more preferably exceeds 45 °C, and most preferably exceeds 65 °C.

The present invention will be elucidated below in further detail with reference to the examples, but the present invention will not be limited thereto. Unless otherwise indicated, all parts, percents, ratios and the like are by weight.

### Examples

All experiments were run on a co-extrusion line equipped with two 4½" and one 2½" extruders, feed-block and coat-hanger die. The maximum line speed used was 600 m/min. The substrates used in the experiments were photographic base paper and pigment coated paper. The substrates were always corona treated prior to extrusion coating by in-line corona treatment stations. All experiments were performed using glossy fine matte chill rollers.

The ultramarine pigments used in the examples are a mixture of ultramarine violet and ultramarine blue in the ratio of 2.75:1.70. The optical brightener used in the examples is a bis-benzoxazole substituted stilbene type optical brightener. Pigments and optical brighteners were applied from master batches with low density polyethylene as carrier resin.

The following abbreviations are used for the different resins which were investigated: low density polyethylene: LDPE; linear low density polyethylene: LLDPE,; medium density polyethylene: MDPE; high density polyethylene: HDPE; ethylene methacrylic acid copolymer: EMA; polypropylene: PP; high melt strength polypropylene: HMS-PP; polypropylene maleic acid copolymer: PP-MA; polybutene-1: PB.

Table 1 summarizes the resins which were used in the production of the various examples.

**Table 1**

| **Resin** | | **Melt Flow index (dg/min)** | **Density (kg/m**^{**3**}**)** |
|---|---|---|---|
| LDPE | LD-1 | 7.5 | 919 |
| | LD-2 | 15 | 918 |
| | LD-3 | 22 | 919 |
| LLDPE | LL-1 | 4.9 | 919 |
| | LL-2 | 6.6 | 910 |
| MDPE | MD-1 | 3.0 | 935 |
| HDPE | HD-1 | 11 | 963 |
| EMA | EMA-1 | 4.0 | 922 |
| | EMA-2 | 7.0 | 922 |
| PP | PP-1*) | 23 | 910 |
| | HMS-PP | 15 | 906 |
| PP-MA | PP-MA | 3.7 | 915 |
| PB | PB-1 | 3.7 | 915 |

| | | | |
|---|---|---|---|
| *): PP-1 is a melt blend of polypropylene and low density polyethylene in a ratio of 7 : 3. | | | |

The melt flow indexes of the polyethylene resins, EMA, PP-MA and PB were measured at 190 °C/2.16 kg; the melt flow index of PP was measured at 230 °C/2.16 kg. (measured according to ASTM D1238).

In the examples the amount and size of the crater defects were measured by microscopy combined with image analysis software provided by Zeiss. The software divides the crater defects in four size classes: < 300 µm², 300-800 µm², 800-1300 µm² and > 1300 µm², respectively. The latter two classes are the most important for the visual judgement of the quality of the substrate. Therefore, a weighted average which gives preferential treatment to the larger size classes is used for the analysis of the crater defect data. In order to compare these measurements the results are rated from 1 to 10, with 1 being the worst with respect to crater defects and 10 being the best with respect to crater defects. In the examples, the rating of 5 is the internal reference.

### Example 1.

### Mono extrusion sample:

Corona treatment activated photographic base paper(weight 167 g/m².) was extrusion coated at a line speed of 350 m/min with an LD-1 mono-layer (autoclave LDPE) containing 15 % anatase titanium dioxide and further more ultramarine pigments and optical brightening agent, total coating weight of the resin layer 30 g/m². The pigmented resin layer was extruded with a melt temperature of 325 DEG C and coated with a linear pressure of 320 N/cm between nip roller and chill roller.

### Co-extrusion sample:

Corona treatment activated photographic base paper (weight 167 g/m².) was co-extrusion coated at the topside with three resin layers, an outermost resin layer, or skin layer, 12.5 g/m² of a middle layer containing LD-1, 25 % anatase titanium dioxide and further more ultramarine pigments and optical brightener, and 16.5 g of a lowermost layer adjacent to the base paper containing LDPE-1, 5 % anatase titanium dioxide and further more ultramarine pigments The outermost layer was applied with a coating weight of 1 g/m². The resin layers were co-extrusion coated with a line speed of 350 m/min, a melt temperature of 325 DEG C and a linear pressure between nip roller and chill roller of 320 N/cm. The following four compositions of the outermost layer were produced, LD-1, LL-1, a 50/50 wt% mixture of afore mentioned LL-1 and LD-1 and a 25/75 wt% mixture of afore mentioned LL-1 and LD-1.

The number and size crater defects were determined from the mono-extruded example and the co-extrusion coated samples and compared. The results of the crater defect rating are given in the following table 2.

**Table 2**

| | Mono-extrusion Example | Outermost layer composition: | | | |
|---|---|---|---|---|---|
| | | LL-1 | LD-1 | LL-1: LD1 1:1 | LL-1 : LD-1 3:1 |
| Rating | 5 | 5~6 | 5~6 | 5~6 | 5~6 |

The results demonstrate that the number of crater defects is comparable to slightly better for a recording medium with an outer layer which comprises low density polyethylene, linear low density polyethylene or a mixture of these as compared with that obtained with a fully pigmented low density polyethylene mono-layer.

### Example 2

Corona treatment activated photographic base paper(weight 167 g/m².) was co-extrusion coated at the topside with three resin layers, an outermost resin layer comprising different polyethylene types and mixtures of polyethylene, a middle layer containing LD-1, 25 % anatase titanium dioxide and further more ultramarine pigments and optical brightener, and a lowermost layer adjacent to the base paper containing LD-1, 5 % anatase titanium dioxide and further more ultramarine pigments. The total coating weight of the resin layers was 30 g/m²; the outermost layer was applied with a coating weight of 1 g/m². The resin layers were co-extrusion coated with a line speed of 350 m/min, a melt temperature of 325 DEG C and linear pressure of 370 N/cm between nip roller and chill roller. The examples were partly produced with a web temperature at the moment of the take up from the chill roller of 35 DEG G, respectively 60 DEG C, which was achieved by an increase in the temperature of the cooling medium in the chill roller.

The results of the crater defect rating are given in the following Table 3.

**Table 3**

| | Web temperature 35 °C; outermost layer composition: | | | | |
|---|---|---|---|---|---|
| | LD-1 | LL-1 | LL-2 | MD-1 | HD-1 |
| *Rating* | 5 | 5 | 5 | 2 | 1 |

| | Web temperature 35 °C at take off and outermost layer composition: | | | | |
|---|---|---|---|---|---|
| | HD-1/LL-1 7 : 3 | HD-1/LL- 1 3:7 | HD-1/LD-1 7:3 | HD-1/LD-1 1:1 | HD-1/LD-1 3 : 7 |
| *Rating* | 3 | 4~5 | 2 | 3 | 4~5 |

| | Web temperature 60 °C; outermost layer composition | | | | |
|---|---|---|---|---|---|
| | LL-1 | LL-2 | HD-1 | HD-1/LL-1 7:3 | HD-1/LL-1 1:1 |
| *Rating* | 6~7 | 7 | 2~3 | 6 | 6 |

The results demonstrate that the number of crater defects is increasing with an outermost layer which comprises medium density polyethylene and, especially, with an outermost layer comprising high density polyethylene. Furthermore, the results show that number of crater defects decreases with mixtures of high density polyethylene and low density or linear low density polyethylene. Also, the results show the reduction in the number of crater defects with increasing web temperature at the take off from the chill roller.

### Example 3

Corona treatment activated photographic base paper (weight. 167 g/m².) was co-extrusion coated with three resin layers, an outermost resin layer comprising different EMA resins, a middle layer containing LD-1, 25 % anatase titanium dioxide and further more ultramarine pigments and optical brightener, and a lowermost layer adjacent to the base paper containing LD-1, 5 % anatase titanium dioxide and further more ultramarine pigments. The total coating weight of the resin layers was 30 g/m² ; the outermost layer was applied with a coating weight of 1 g/m². The resin layers were co-extrusion coated with a line speed of 350 m/min, a melt temperature of 325 DEG C and linear pressure of 370 N/cm.

The results of the crater defect rating are given in the following Table 4.

**Table 4**

| | Outermost layer composition | | | | |
|---|---|---|---|---|---|
| | LL-1 | EMA-1 | EMA-2 | LL-1 | EMA-2 |
| Web temperature | 28 °C | 28 °C | 28 °C | 60 °C | 60°C |
| *Rating* | 5 | 6~7 | 6~7 | 6~7 | 7 |

The results demonstrate that the number of crater defects is slightly decreasing with an outermost layer which comprises ethylene methacrylic acid copolymer. Also, the results show the reduction in the number of crater defects with increasing web temperature at the take off from the chill roller.

### Example 4

Corona treatment activated photographic base paper was co-extrusion coated with three resin layers, an outermost resin layer, a middle layer containing LD-2 (autoclave LDPE), 25 % anatase titanium dioxide and further more ultramarine pigments and optical brightener, and a lowermost layer adjacent to the base paper containing LD-2, 5 % anatase titanium dioxide and further more ultramarine pigments. The total coating weight of the resin layers was 30 g/m²; the outermost layer was applied with a coating weight of 1 g/m². The resin layers were co-extrusion coated with a line speed of 300 m/min, a melt temperature of 315 DEG C and linear pressure of 320 N/cm.

The results of the crater defect rating are given in the following Table 5:

**Table 5**

| | Outermost layer composition: | | |
|---|---|---|---|
| | LL-2/LD-31:1 | HMS-PP | PP-1 |
| *Rating* | 5 | 9 | 9 |

| | | | |
|---|---|---|---|
| LDPE-3: tubular reactor type LDPE | | | |

The results demonstrate that the number of crater defects is tremendously decreased with an outermost layer which comprises polypropylene resin.

Note that compared with examples 1-3, the present examples utilize LD-2 and LD-3 with a higher melt flow index than LD-1. As is well known in the art, the utilization of a higher melt flow index resin leads already to a reduction in the number of crater defects which also showed up in the actual numerical crater defect count of this example compared to examples utilization resin LD-1 under the same processing conditions as applied in this example. The structure with an outermost layer comprising LL-2 and LD-3 in a ratio of 1 : 1 is taken as the internal reference of this example with a crater defect rating of 5.

### Example 5

Corona treatment activated photographic base paper (PBP)(weight 167 g/m²) and corona treatment activated pigment coated paper (PCP) (weight 171 g/m² with a dry pigment coating weight of 12 g/m²)) were co-extrusion coated with three resin layers, an outermost resin layer, a middle layer containing LD-2 (autoclave LDPE), 25 % anatase titanium dioxide and further more ultramarine pigments and optical brightener, and the lowermost layer adjacent to the base paper containing LD-2, 5 % anatase titanium dioxide and further more ultramarine pigments. The total coating weight of the resin layers was 25 g/m², respectively 30 g/m² ; in both cases the outermost layer was applied with a coating weight of 1 g/m². The resin layers were co-extrusion coated with a line speed of 420, 500 and 600 m/min, a melt temperature of 325 DEG C and linear pressure of 370 N/cm.

The results of the crater defect rating are given in the following table 6 together with the composition of the outermost layer, the type of substrate, the total coating weight and the line speed.

**Table 6**

| *Composition outer most layer* | *Substrate* | *Line-speed (mlmin)* | *Total coating weight (glm*^{*2*}*)* | *Crater effect Rating* |
|---|---|---|---|---|
| LD-3/LL-21:1 | PBP | 420 | 25 | 1 |
| HMS-PP | PBP | 420 | 25 | 9 |
| LD-3/LLD-21:1 | PCP | 420 | 25 | 3 |
| HMS-PP | PCP | 420 | 25 | 10 |
| LD-3/LL-21:1 | PBP | 420 | 30 | 5 |
| HMS-PP | PBP | 420 | 30 | 9 |
| LD-3/LL-2 1 : 1 | PCP | 420 | 30 | 8 |
| HMS-PP | PCP | 420 | 30 | 10 |
| LD-3/LL-21:1 | PBP | 600 | 25 | 2 |
| HMS-PP | PBP | 600 | 25 | 9 |
| HMS-PP | PCP | 600 | 25 | 10 |
| | | | | |
| HMS-PP | PBP | 600 | 30 | 9 |
| | | | | |
| HMS-PP | PCP | 600 | 30 | 9 |
| HMS-PP/LD-3/LL-2 2 : 1 : 1 | PBP | 500 | 25 | 9 |
| HMS-PP/LD-3/LL-2 6 : 1: 1 | PBP | 500 | 25 | 9 |
| HMS-PP | PBP | 500 | 25 | 9 |
| HMS-PP/LD-3/LL-2 2 : 1 : 1 | PCP | 500 | 25 | 9 |
| HMS-PP/LD-3/LL-2 6 : 1 : 1 | PCP | 500 | 25 | 9 |
| HMS-PP | PCP | 500 | 25 | 9 |
| HMS-PP/LD-3/LL-2 2 : 1:1 | PBP | 500 | 30 | 9 |
| HMS-PP/LD-3/LL-2 6 : 1 : 1 | PBP | 500 | 30 | 9 |
| HMS-PP | PBP | 500 | 30 | 9 |
| HMS-PP/LD-3/LL-22 : 1 : 1 | PCP | 500 | 30 | 9 |
| HMS-PP/LD-3/LL-2' 6 : 1 :1 | PCP | 500 | 30 | 9 |
| HMS-PP | PCP | 500 | 30 | 9 |

The results clearly demonstrate that the number of crater defects is tremendously decreased with an outermost layer which comprises polypropylene resin and also the beneficial effect on the crater defect rating when combining an outermost layer comprising polypropylene with a pigment coated paper substrate.

### Example 6

Corona treatment activated photographic base paper (weight 167 g/m²) was co-extrusion coated with three resin layers, an outermost resin layer, a middle layer containing LD-2, 25 % anatase titanium dioxide and further more ultramarine pigments and optical brightener, and a lowermost layer adjacent to the base paper containing LD-2, 5 % anatase titanium dioxide and further more ultramarine pigments. The resin layers were co-extrusion coated with a line speed of 420 m/min and linear pressure of 370 N/cm. Melt temperature, outermost layer coating weight and total coating weight were varied as is indicated in Table 7, which also contains the results of the crater defect rating.

**Table 7**

| *Composition outer most layer* | *Melt temperature (°C)* | *Total coating weight (g*/*m*^{*2*}*)* | *Outermost layer coating Weight (g*/*m*^{*2*}*)* | *Crater defect Rating* |
|---|---|---|---|---|
| LD-3/LL-2 1:1 | 325 | 30 | 1 | 5 |
| HMS-PP | 325 | 30 | 5 | 9 |
| | 325 | 30 | 9 | 7 |
| | 325 | 20 | 1 | 4~5 |
| | 300 | 30 | 1 | 5 |
| LD-3/LL-2 50:50 | 300 | 20 | 1 | 1 |

The results show that with an outermost layer which comprises polypropylene resin it is possible to choose for the manufacture a recording medium with a crater defect rating which is comparable to slightly worse at a strongly decreased total coating weight of 20 g/m² only, or, for the manufacturing at a strongly decreased melt temperature of 300 °C. The first choice clearly decrease the raw material costs directly; the second choice reduces the number of defects e.g. die drool, which indirectly influence manufacturing costs because the number of line stops is reduced and the amount of out of specification material is reduced.

### Example 7

Corona treatment activated photographic base paper (weight 167 g/m²) was co-extrusion coated with three resin layers, an outermost resin layer, a middle layer containing LD-2, 25 % anatase titanium dioxide and further more ultramarine pigments and optical brightener, and a lowermost layer adjacent to the base paper containing LD-2, 5 % anatase titanium dioxide and further more ultramarine pigments. The total coating weight of the resin layers was 30 g/m²; the outermost layer was applied with a coating weight of 1 g/m². The outermost layer contained polypropylene and various amounts of polypropylene maleic acid copolymer PP-MA (melt flow index 190 °C/2.16 kg is 3.7 dg/min; density is 915 kg/m³). The resin layers were co-extrusion coated with a line speed of 300 m/min, a melt temperature of 325 DEG C and linear pressure of 320 N/cm.

The results of the crater defect rating are given in the following Table 8.

**Table 8**

| | *Outermost layer composition* | | | |
|---|---|---|---|---|
| | HMS-PP | HMS-PP/PP-MA 95:5 | HMS-PP/PP-MA 80:20 | HMS-PP/PP-MA 50:50 |
| *Rating* | 5 | 8 | 8 | 3 |

Example 4 clearly demonstrated that the number of crater defects is drastically decreased with the incorporation of polypropylene in the outermost layer of the recording medium of the present invention. In the present Example 7, the recording medium with an outermost layer which comprises polypropylene is taken as internal crater defect rating reference for example 7. The results demonstrate that the number of crater defects can be decreased additionally with the incorporation of an adhesive resin having a ratio with the alpha olefinic polymer resin ranging from 5/95 to 20/80

### Example 8

Corona treatment activated photographic base paper (weight 167 g/m²) was co-extrusion coated with three resin layers, an outermost resin layer, a middle layer containing LDPE-2, 25 % anatase titanium dioxide and further more ultramarine pigments and optical brightener, and a lowermost layer adjacent to the base paper containing LDPE-2 (autoclave LDPE), 5 % anatase titanium dioxide and further more ultramarine pigments. The total coating weight of the resin layers was 30 g/m² in which the outermost layer was applied with a coating weight of 1 g/m². The resin layers were co-extrusion coated with a line speed of 300 m/min, a melt temperature of 325 DEG C and linear pressure of 280, 320 N/cm, respectively 370 N/cm.

The results of the crater defect rating are given in the following Table 9.

**Table 9**

| | *Outermost layer composition:* | | | |
|---|---|---|---|---|
| | LD-3/LL-2 1: 1 | LD-3/LL-2 1 : 1 | LD-3/LL-2 1 : 1 | PB-1 |
| *Linear pressure* | 370 | 280 | 320 | 320 |
| *Rating:* | 8 | 2 | 5 | 9 |

The results demonstrate the positive effect of an outermost layer which comprises a homopolymer alpha-olefinic resin, in this case polybutene-1 on the number of crater defects even when used at a low nip pressure.

### Example 9

Corona treatment activated photographic base paper (weight167 g/m²) was co-extrusion coated with three resin layers, an outermost resin layer, a middle layer containing LDPE-2, 25 % anatase titanium dioxide and further more ultramarine pigments and optical brightener, and a lowermost layer adjacent to the base paper containing LDPE-2, 5 % anatase titanium dioxide and further more ultramarine pigments. The total coating weight of the resin layers was 30 g/m² in which the outermost layer was applied with a coating weight of 1 g/m². The resin layers were co-extrusion coated with a line speed of 300 m/min, a melt temperature of 325 DEG C and linear pressure of 320 N/cm.

The results of the crater defect rating are given in the following Table 10.

**Table 10**

| | *Outermost layer composition* | | |
|---|---|---|---|
| | LD-3/LL-2 1:1 | HMS-PP/LD-3/LL-2 1:4.5:4.5 | HMS-PP/LD-3/LL-2 3:4:4 |
| *Rating* | 5 | 6 | 6~7 |

The results demonstrate that the number of crater defects can be decreased already with the incorporation of low concentration of a alpha-olefinic polymer in the outermost layer of a recording medium.

## Claims

1. Support comprising a substrate having a top side and a back side, wherein on at least its top side are provided at least two resin layers, wherein the outermost layer, which is most distant from the substrate, comprises a polymer comprising alpha-olefin monomers of carbon content C3 or higher (C₃+ alpha-olefin).

2. Support according to claim 1, wherein said polymer is selected from the group consisting of homopolymers of C₃₊ alpha-olefins; copolymers of C₃+ alpha-olefins; and mixtures thereof.

3. Support according to any of the previous claims, wherein said polymer comprises a copolymer of C₃+ alpha-olefin with ethylene.

4. Support of claim 3 wherein said copolymer contains at least 30 mol% of said C₃+ alpha-olefin monomers.

5. Support according to any of the previous claims, wherein said polymer is mixed with one or more polyethylene resins.

6. Support according to the previous claim, wherein the amount of said polyethylene resin is below 50% on a weight basis.

7. Support according to any of the previous claims, wherein said C₃+ alpha-olefin is propylene or 1-butene.

8. Support according to any of the previous claims, wherein said outermost layer is applied with a coating weight which is at the most 3 g/m².

9. Support of claim 8, wherein said outermost layer is applied with a coating weight which is at the most 1 g/m².

10. Support according to any of the previous claims, wherein said outermost layer comprises a homopolymer of alpha-olefin of carbon content C3 or higher, copolymers of alpha-olefin of carbon content C3 or higher or copolymers of alpha-olefin of carbon content C3 or higher with ethylene or mixtures of afore mentioned homopolymers or copolymers of alpha-olefins with polyethylene which comprise at least 70 % of afore mentioned homopolymers or copolymers of alpha-olefins.

11. Support according to any of the previous claims, wherein said outermost layer comprises homopolymer of alpha-olefin of carbon content C3 or higher, copolymers of alpha-olefin of carbon content C3 or higher or copolymers of alpha-olefin of carbon content C3 or higher with ethylene or mixtures of afore mentioned homopolymers or copolymers of alpha-olefins with polyethylene which comprise at least 90 % of afore mentioned homopolymers or copolymers of alpha-olefins.

12. Support according to any of the previous claims, wherein said outermost layer further comprises opacifying pigment or a mixture of opacifying pigments with other opacifying pigment.

13. Support according to any of the previous claims, wherein at least a second resin layer is provided in between the outermost layer and the substrate and which comprises preferentially polyethylene resin or mixtures of polyethylene resins.

14. Support of claim 13 wherein said second layer is applied with a coating weight between 8 g/m² and 50 g/m², and preferably between 8 g/m² and 25 g/m².

15. Support of claim 13 or 14, wherein said second layer further comprises opacifying pigment or a mixture of opacifying pigments with other opacifying pigment.

16. Support according to any of the previous claims, wherein at least a third resin layer is provided in between the outermost layer and the substrate and which comprises preferentially polyethylene resin or mixtures of polyethylene resins.

17. Support of claim 16, wherein said third layer is applied with a coating weight between 8 g/m² and 50 g/m², and preferably between 8 g/m² and 25 g/m².

18. Support of claim 16 or 17, wherein said third layer further comprises opacifying pigment or a mixture of opacifying pigments with other opacifying pigment.

19. Support according to any of the previous claims, wherein said substrate is a raw base paper, a pigment coated paper a synthetic paper or a polymer sheet material.

20. Support according to any of the previous claims, wherein said substrate is a pigment coated paper with an average surface roughness on the side of the pigment coated paper which receives the resin layers of less than 2.0 µm, more preferably of less than 1.5 µm and most preferably below 1.0 µm.

21. Method for manufacturing a support according to any of the previous claims wherein said support is manufactured using a co-extrusion coating technique in which at least two resin layers are extruded simultaneously via a feedblock or a multimanifold die at elevated temperature on a moving substrate having a certain line speed, said resin layers and substrate coming together in a NIP having a NIP pressure, where the NIP is in between a chill roll having a chilling function and a pressure roll having a pressure function and where the support is removed from the chill roll with a lower temperature than that of the polymer resin melt.

22. Method according to claim 21, wherein said support is manufactured with a line speed of at least 300 m/min.

23. Method according to claim 21 or 22, wherein said support is manufactured with a melt temperature of at least 300 °C.

24. Method of claim 21-23, wherein the NIP pressure is below 370 N/cm, preferably below 320 N/cm and most preferably below 280 N/cm.

25. Method according to claim 21 to 24, wherein said the support is taken of from the chill roll with a temperature which exceeds 35 °C, more preferably exceeds 45 °C, and most preferably exceeds 65 °C.

26. Support according to any of the claims 1-20, or a support obtainable by any of the claims 21-25, which support is used as a support for recording media.
